# EUROPEAN PATENT SPECIFICATION

(11) **EP 3 963 212 B1**
(45) Date of publication and mention of the grant of the patent: **31.12.2025**
(21) Application number: 20720504.8
(22) Date of filing: 24.03.2020
(51) Int. Cl.: F04D 29/70, F04D 29/60, F24C 15/20, F04D 29/62, F04D 25/08

(54) **FILTER CARRIER ATTACHABLE TO AN INTAKE GRID**
AN EINEM EINLASSGITTER BEFESTIGBARER FILTERTRÄGER
SUPPORT DE FILTRE POUVANT ÊTRE FIXÉ À UNE GRILLE D'ADMISSION

(30) Priority: 03.05.2019 IT 201900006516
(43) Date of publication of application: 09.03.2022
(73) Proprietor: ELICA S.p.A., 60044 Fabriano (AN) (IT)
(72) Inventor: BORGIANI, Lorenzo, 60044 Fabriano AN (IT); PIERMARTIRI, Fabio, 60044 Fabriano AN (IT)
(74) Representative: Perani & Partners S.p.A.
(86) International application number: PCT/IB2020/052747
(87) International publication number: WO 2020/225614

(56) References cited:
- WO-A1-2019/038632
- DE-A1- 102017 217 853
- DE-B3- 102016 107 190

## Description

The present invention relates to a filter holder of the type adapted to be attached to a suction grille of a fan. In particular, the filter holder of the present invention is designed for use in extractor and/or filter hoods for domestic use. Of course, as further explained herein, the filter holder of the present invention may have more general applications.

A filter holder of the type adapted to be attached to a suction grille of a fan is known in the art. This suction grille has a substantially circular shape and a center axis of symmetry. Sometimes, the suction grill may have a slight taper, i.e. with a central zone extending outwards with respect to a peripheral zone.

A cylindrical wall is fixed proximate to the central axis of the suction grille and extends outwards from the grille. Three angularly spaced projections are placed on the distal edge of the wall, and extend outwards from the cylindrical wall, i.e. parallel to the suction grille.

The filter holder of the prior art, which is designed to be attached to the above discussed suction grille, has a base grille. This base grille has a central zone which is configured to be arranged along the center axis of the suction grille. A holding volume is partially defined by said base grille and configured to receive filter material.

For fixation to the suction grille, the filter holder of the prior art comprises a coupling ring, having a greater diameter than the cylindrical wall of the suction grille. This coupling ring is located at the central zone and has three angularly spaced hooks, which are adapted to hold the projections that are fixed to the suction grille. When the user wants to couple the filter holder, he/she fits the coupling ring onto the cylindrical wall, introducing the hooks between the projections. Once the filter holder is in its position, it is rotated for the hooks to fit between the projections and the suction grille. As a result, the projections retain the hooks and prevent the filter holder from being pulled out by exerting a force along the center axis.

In order to be pulled out, the filter holder is rotated in the reverse direction to release the hooks from their respective projections and moved away along the center axis.

Another similar filter holder is described in document DE 10 2016 107190 B3.

Disadvantageously, the filter holders of the prior art are difficult to pull out, especially when additional components are present around the filter holder itself, preventing it from being properly grasped.

### SUMMARY OF THE INVENTION

Therefore, the technical purpose of the present invention is to provide a filter holder of the type adapted to be attached to a suction grille, that can obviate the above discussed prior art drawbacks.

In particular, the object of the present invention is to provide a filter holder of the type adapted to be attached to a suction grille that can facilitate the pull-out operation.

The aforementioned technical purpose and objects are substantially fulfilled by filter holder of the type adapted to be attached to a suction grille, that comprises the technical features as disclosed in one or more of the accompanying claims.

In particular a filter holder of the present invention is adapted to be attached to a suction grille of a fan. This suction grille has a center axis and retaining means proximate to the center axis.

The filter holder comprises a base grille, which is adapted to face the suction grille and has a central zone configured to be arranged along the center axis. A holding volume is partially defined by said base grille and configured to receive filter material.

Coupling means are located at the central zone. These coupling means are configured to engage on the retaining means of the suction grille. The coupling means have a seat.

The filter holder further comprises a release member adapted to fit into the seat and configured to engage the suction grille on said retaining means. This release member is configured to push the base grille away from the suction grille, disengage the coupling means from the retaining means and disconnect the base grille from the suction grille.

This device solves the technical problem in that the release member can exert a force that is in itself sufficient to remove the filter holder. Therefore, the filter holder need not be rotated relative to the suction grille, which avoids the need to grasp the filter holder to remove it.

### LIST OF DRAWINGS

Further features and advantages of the present invention will result more clearly from the illustrative, non-limiting description of a preferred, non-exclusive embodiment of a filter holder of the type adapted to be attached to a suction grille, as shown in the annexed drawings, in which:

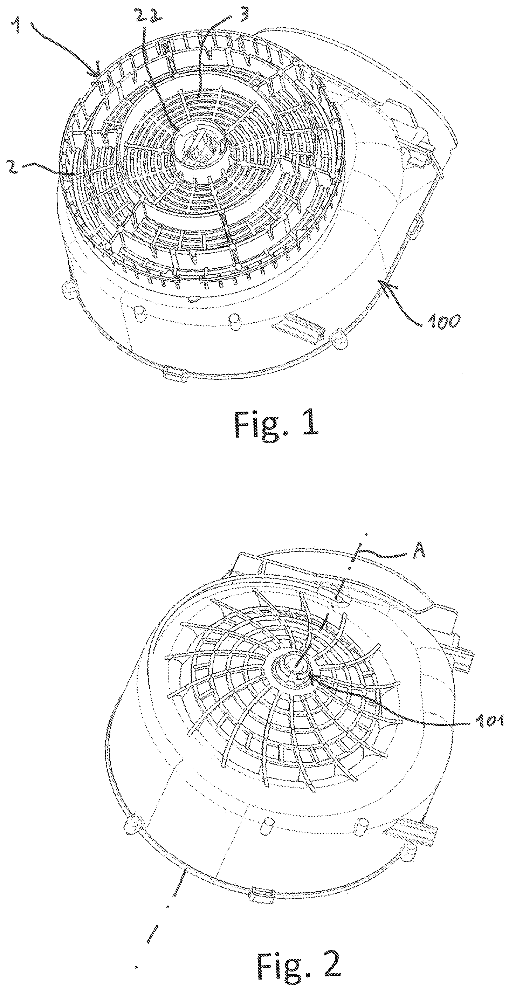

- Figure 1 is a perspective view of a filter holder of the present invention, when attached to a suction grille;
- Figure 2 is a perspective view of a suction grille;
- Figure 3 is a perspective view of a detail of the grille of Figure 2;
- Figure 4 is a perspective view of a detail of filter holder of Figure 1;
- Figure 5 is a sectional side view of the filter holder of Figure 1 when attached to the grille of Figure 2;
- Figure 5a is a magnified detail of the view of Figure 5; and

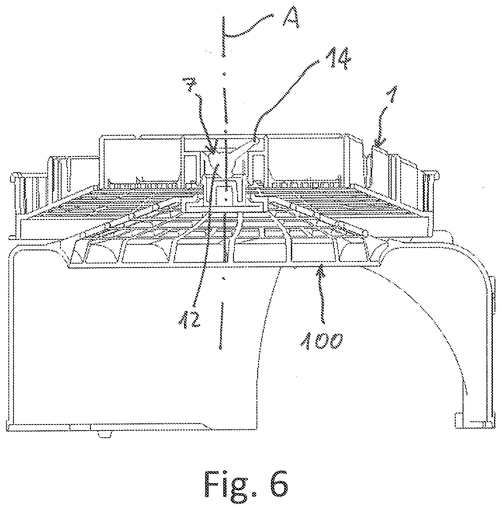

- Figure 6 is a sectional side view of the filter holder of Figure 1 when attached to the grille of Figure 2, and as it is being released.

### DETAILED DESCRIPTION

Referring to the accompanying figures, numeral 1 designates a filter holder of the type adapted to be attached to a suction grille 100 of a fan.

The suction grille 100, which is not part of the present invention per se, is substantially circular and has a center axis "A". Retaining means 101 for locking the filter holder on the grille 100 are located proximate to the center axis "A". Further details about the retaining means 101 will be provided hereinbelow.

The filter holder 1 comprises a base grille 2, which is adapted to face the suction grille 100. This base grille 2 has a central zone 2a configured to be arranged along the center axis "A" of the suction grille 100. In the preferred embodiment, the base grille 2 has a substantially circular plan shape which, when the filter holder 1 is stably attached to the suction grille 100, is centered on the center axis "A", although the base grille 2 may have any shape in alternative embodiments. Reference will be often made herein to a circular or axially symmetric shape of the base grille 2 without prejudice to the general scope of the invention.

The filter holder 1 comprises an outer wall 5, which extends transverse, and particularly perpendicular to the base grille 2. This outer wall 5 extends from an outer perimeter of the base grille 2.

A holding volume 3 is partially defined by the base grille 2. This holding volume 3 is also partially defined by the aforementioned peripheral wall 5, and is configured to receive the filter material which, by way of example, is activated carbon.

More in detail, the filter holder 1 comprises a plurality of ribs 6, i.e. radial and transverse ribs. These ribs 6 have the purpose to stiffen and support the base grille 2.

Coupling means 4 are located at the central zone 2a of the base grille 2. These coupling means 4 are configured to engage on the aforementioned retaining means 101 of the suction grille 100.

In particular, the coupling means 4 comprise at least one hook 9, which is adapted to engage in snap-lock fashion the retaining means 101, when the base grille 2 is pushed against the suction grille 100 with a force directed along the center axis "A". The retaining means 101 have an abutment surface 102, which is adapted to receive the coupling means 4, in particular the hook 9.

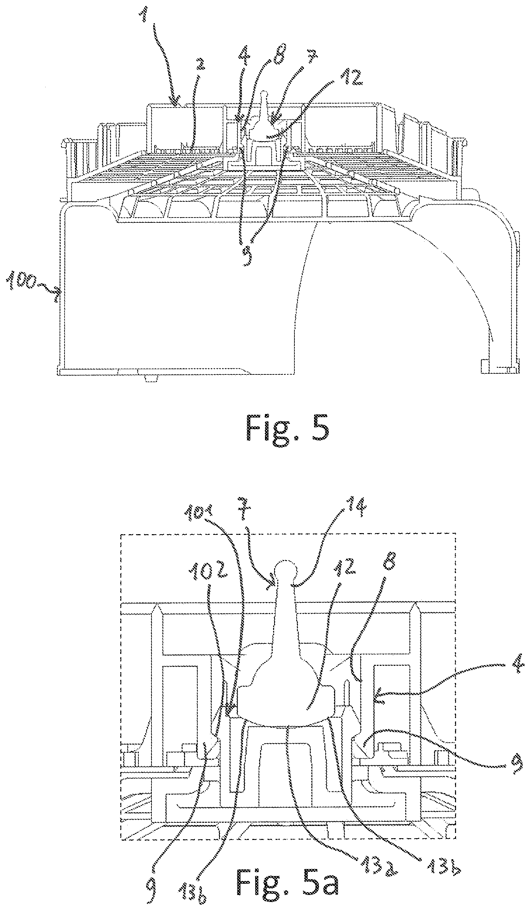

As shown for example in Figure 5a, the coupling means 4 comprise a pair of hooks 9, which extend circumferentially around the center axis "A". The retaining means 101 comprise a plurality of abutment surfaces 102, which are placed at the same distance from the center axis "A". When the filter holder 1 is applied to the suction grille 100, the hooks 9 expand due to the compression exerted by the projections 102 and then spring back onto the projections 102 and retain them firmly.

It shall be noted that the coupling means 4 have a seat 8. Such seat 8 is defined by an inner wall 10 which surrounds the center axis "A" when the filter holder 1 is coupled to the suction grille 100.

According to the present invention, the filter holder 1 further comprises a release member 7, which is adapted to fit into the seat 8. This release member 7 is configured to engage the suction grille 100 on the retaining means 101. The release member 7 has the purpose to push the base grille 2 away from the suction grille 100, to disengage the coupling means 4 from the retaining means 101 and disconnect the base grille 2 from the suction grille 100.

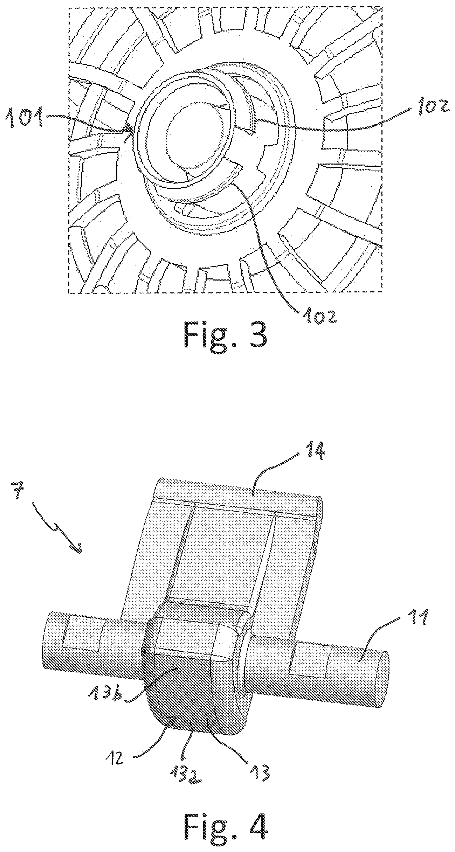

As shown for example in Figure 4, the release member 7 comprises a pin 11, which is configured to be arranged transverse, particularly perpendicular to the center axis "A". This pin 11 is further configured to be retained in the seat 8, thereby allowing the release member 7 to rotate. For this purpose, the seat 8 comprises a pair of diametrically opposite openings 8a. Each opening 8a accommodates a respective end of the pin 11.

The release member 7 further comprises a cam 12 which is fixed to the pin 11. This cam 12 is configured to be pressed against the suction grille 100, in particular when the portafilter 1 is being attached thereto. The cam 12 is adapted to rotate with the pin 11 to push the base grille 2 away from the suction grille 100.

More in detail, the cam 12 has an outer surface 13 which, in operation, is pressed against the suction grille 100. This outer surface 9a has a central portion 13a and at least one peripheral portion 13b. In the embodiment as described above, the outer surface 13 has a single central portion 13a between a pair of peripheral portions 13b.

It is worth noting that the central portion 13a is situated at a first distance from the pin 11 and is configured to contact the suction grille 100 when the coupling means 4 are engaged on the retaining means 101. Each peripheral portion 13b is placed at a second distance from the pin 11. The peripheral portions 13b are designed not to contact the suction grille 100 when the coupling means 4 are engaged on the retaining means 101 but may contact the suction grille 100 upon rotation of the pin 11.

It shall be noted that the second distance is greater than the first distance. As a result, when the cam 12 rotates, upon rotation of the pin 11, the filter holder 1 is pushed upwards, and forces the hooks 9 to expand and release the abutment surfaces 102.

It shall be noted that the release member 7 comprises a grip portion 14, which is particularly fixed to the pin 11 and designed to be grasped by a user. This grip portion 14 is opposite to the cam 12 with respect to the pin 11. Advantageously, this will allow the user to act on the grip portion 14 to cause the pin 11 and the cam 12 to rotate and to disconnect the filter holder 1.

## Claims

1. A filter holder (1) of the type adapted to be attached to a suction grille (100) of a fan, said suction grille (100) having a center axis (A), retaining means (101) located proximate to said center axis (A), said filter holder (1) comprising:
- a base grille (2) adapted to face the suction grille (100) and having a central area (2a) configured to be arranged along said center axis (A);
- a holding volume (3) partially defined by said base grille (2) and configured to receive the filter material;
- coupling means (4) located at said central area (2a) and configured to engage on said retaining means (101) of said suction grille (100);
**characterized in that** said coupling means (4) have a seat (8), said filter holder (1) further comprising a release member (7) adapted to fit into said seat (8) and configured to engage said suction grille (100) on said retaining means (101), said release member (7) being configured to push said base grille (2) away from said suction grille (100), disengage these coupling means (4) from said retaining means (101) and disconnect said base grille (2) from said suction grille (100).

2. A filter holder (1) as claimed in the preceding claim, **characterized in that** said seat (8) is defined by an inner wall (10) surrounding the center axis (A), said seat (8) comprising at least one hook (9) configured for snap-lock engagement on said retaining means (101), when said base grille (2) is pushed against said suction grille (100) is pushed against said suction grille (100) with a force directed along said center axis (A).

3. A filter holder (1) as claimed in any of the preceding claims, **characterized in that** said release member (7) comprises a pin (11) that is configured to be arranged transverse, particularly perpendicular to the center axis (A), said pin (11) being further configured to be retained in said seat (8) while allowing the release member (7) to rotate.

4. A filter holder (1) as claimed in the preceding claim, **characterized in that** said release member (7) comprises a cam (12) that is fixed to the pin (11), is configured to be pressed against said suction grille (100) and is adapted to rotate about said pin (11) to push said base grille (2) away from said suction grille (100).

5. A filter holder (1) as claimed in the preceding claim, **characterized in that** said cam (12) has an outer surface (13) with a central portion (13a) situated at a first distance from said pin (11) and configured to contact said suction grille (100) when said coupling means (4) are engaged by said retaining means (101), at least one peripheral portion (13b) situated at a second distance from said pin (11), said second distance being greater than said first distance.

6. A filter holder (1) as claimed in the preceding claim, **characterized in that** said peripheral portion (13b) is configured not to contact said suction grille (100) when said coupling means (4) are engaged on said retaining means (101), said peripheral portion (13b) being configured to contact with said suction grille (100) upon rotation relative to said pin (11).

7. A filter holder (1) as claimed in any of claims 4 to 6, **characterized in that** the release member (7) comprises a grip portion (14) attached to said pin (11) and adapted to be grasped by a user to rotate said cam (12) about said pin (11).

8. A filter holder (1) as claimed in the preceding claim, **characterized in that** said grip portion (14) is opposite to said cam (12) relative to said pin (11).

9. A gas channeling arrangement comprising a suction grille (100) of a fan, said suction grille (100) having a center axis (A) and retaining means (101) located proximate to said center axis (A); and **characterized in that** it further comprises a filter holder (1) as claimed in any of the preceding claims attached to said suction grille (100).

10. A gas channeling arrangement as claimed in the preceding claim, **characterized in that** said retaining means (101) have an abutment surface (102), which is adapted to receive the coupling means (4) of the filter holder (1).

## Patentansprüche

1. Filterhalter (1) von dem Typ, der dazu ausgelegt ist, an einem Ansauggitter (100) eines Lüfters befestigt zu werden, wobei das Ansauggitter (100) eine Mittelachse (A) und Haltemittel (101), die in der Nähe der Mittelachse (A) angeordnet sind, aufweist, wobei der Filterhalter (1) umfasst:
∘ ein Basisgitter (2), das dazu ausgelegt ist, dem Ansauggitter (100) zugewandt zu sein, und einen zentralen Bereich (2a) aufweist, der konfiguriert ist, um entlang der Mittelachse (A) angeordnet zu werden;
∘ ein Haltevolumen (3), das teilweise durch das Basisgitter (2) definiert und konfiguriert ist, um das Filtermaterial aufzunehmen;
∘ Kopplungsmittel (4), die an dem zentralen Bereich (2a) angeordnet und konfiguriert sind, um mit den Haltemitteln (101) des Ansauggitters (100) in Eingriff zu gelangen; **dadurch gekennzeichnet, dass** die Kopplungsmittel (4) einen Sitz (8) aufweisen, wobei der Filterhalter (1) ferner ein Löseelement (7) umfasst, das dazu ausgelegt ist, in den Sitz (8) zu passen, und konfiguriert ist, um mit dem Ansauggitter (100) an den Haltemitteln (101) in Eingriff zu gelangen, wobei das Löseelement (7) konfiguriert ist, um das Basisgitter (2) von dem Ansauggitter (100) wegzudrücken, diese Kopplungsmittel (4) von den Haltemitteln (101) außer Eingriff zu bringen und das Basisgitter (2) von dem Ansauggitter (100) zu trennen.

2. Filterhalter (1) nach dem vorhergehenden Anspruch, **dadurch gekennzeichnet, dass** der Sitz (8) durch eine Innenwand (10) definiert ist, welche die Mittelachse (A) umgibt, wobei der Sitz (8) mindestens einen Haken (9) umfasst, der zum Schnappeingriff an den Haltemitteln (101) konfiguriert ist, wenn das Basisgitter (2) mit einer entlang der Mittelachse (A) gerichteten Kraft gegen das Ansauggitter (100) gedrückt wird.

3. Filterhalter (1) nach einem der vorhergehenden Ansprüche, **dadurch gekennzeichnet, dass** das Löseelement (7) einen Stift (11) umfasst, der konfiguriert ist, um quer, insbesondere senkrecht, zur Mittelachse (A) angeordnet zu sein, wobei der Stift (11) ferner konfiguriert ist, um in dem Sitz (8) gehalten zu werden, während er dem Löseelement (7) eine Drehung ermöglicht.

4. Filterhalter (1) nach dem vorhergehenden Anspruch, **dadurch gekennzeichnet, dass** das Löseelement (7) einen Nocken (12) umfasst, der an dem Stift (11) befestigt ist, konfiguriert ist, um gegen das Ansauggitter (100) gedrückt zu werden, und dazu ausgelegt ist, sich um den Stift (11) zu drehen, um das Basisgitter (2) von dem Ansauggitter (100) wegzudrücken.

5. Filterhalter (1) nach dem vorhergehenden Anspruch, **dadurch gekennzeichnet, dass** der Nocken (12) eine Außenfläche (13) mit einem zentralen Abschnitt (13a) aufweist, der in einem ersten Abstand von dem Stift (11) angeordnet und konfiguriert ist, das Ansauggitter (100) zu berühren, wenn die Kopplungsmittel (4) mit den Haltemitteln (101) in Eingriff stehen, sowie mindestens einen peripheren Abschnitt (13b), der in einem zweiten Abstand von dem Stift (11) angeordnet ist, wobei der zweite Abstand größer als der erste Abstand ist.

6. Filterhalter (1) nach dem vorhergehenden Anspruch, **dadurch gekennzeichnet, dass** der periphere Abschnitt (13b) konfiguriert ist, das Ansauggitter (100) nicht zu berühren, wenn die Kopplungsmittel (4) mit den Haltemitteln (101) in Eingriff stehen, wobei der periphere Abschnitt (13b) konfiguriert ist, bei einer Drehung relativ zu dem Stift (11) mit dem Ansauggitter (100) in Kontakt zu gelangen.

7. Filterhalter (1) nach einem der Ansprüche 4 bis 6, **dadurch gekennzeichnet, dass** das Löseelement (7) einen Griffabschnitt (14) umfasst, der an dem Stift (11) angebracht und dazu ausgelegt ist, von einem Benutzer ergriffen zu werden, um den Nocken (12) um den Stift (11) zu drehen.

8. Filterhalter (1) nach dem vorhergehenden Anspruch, **dadurch gekennzeichnet, dass** der Griffabschnitt (14) dem Nocken (12) relativ zu dem Stift (11) gegenüberliegt.

9. Gasführungsanordnung, umfassend: ein Ansauggitter (100) eines Lüfters, wobei das Ansauggitter (100) eine Mittelachse (A) und Haltemittel (101), die in der Nähe der Mittelachse (A) angeordnet sind, aufweist; und **dadurch gekennzeichnet, dass** sie ferner einen Filterhalter (1) nach einem der vorhergehenden Ansprüche umfasst, der an dem Ansauggitter (100) befestigt ist.

10. Gasführungsanordnung nach dem vorhergehenden Anspruch, **dadurch gekennzeichnet, dass** die Haltemittel (101) eine Anlagefläche (102) aufweisen, die dazu ausgelegt ist, die Kopplungsmittel (4) des Filterhalters (1) aufzunehmen.

## Revendications

1. Porte-filtre (1) du type destiné à être fixé à une grille d'aspiration (100) d'un ventilateur, ladite grille d'aspiration (100) ayant un axe central (A), des moyens de retenue (101) situés à proximité dudit axe central (A), ledit porte-filtre (1) comprenant :
∘ une grille de base (2) destinée à faire face à la grille d'aspiration (100) et ayant une zone centrale (2a) configurée pour être agencée le long dudit axe central (A) ;
∘ un volume de retenue (3) partiellement défini par ladite grille de base (2) et configuré pour recevoir le matériau filtrant ;
∘ des moyens d'accouplement (4) situés au niveau de ladite zone centrale (2a) et configurés pour se mettre en prise sur lesdits moyens de retenue (101) de ladite grille d'aspiration (100) ; **caractérisé en ce que** lesdits moyens d'accouplement (4) présentent un siège (8), ledit porte-filtre (1) comprenant en outre un élément de libération (7) adapté pour s'ajuster dans ledit siège (8) et configuré pour se mettre en prise avec ladite grille d'aspiration (100) sur lesdits moyens de retenue (101), ledit élément de libération (7) étant configuré pour repousser ladite grille de base (2) à l'écart de ladite grille d'aspiration (100), pour désengager ces moyens d'accouplement (4) desdits moyens de retenue (101) et pour déconnecter ladite grille de base (2) de ladite grille d'aspiration (100).

2. Porte-filtre (1) selon la revendication précédente, **caractérisé en ce que** ledit siège (8) est défini par une paroi interne (10) entourant l'axe central (A), ledit siège (8) comprenant au moins un crochet (9) configuré pour un encliquetage sur lesdits moyens de retenue (101), lorsque ladite grille de base (2) est poussée contre ladite grille d'aspiration (100) avec une force dirigée le long dudit axe central (A).

3. Porte-filtre (1) selon l'une quelconque des revendications précédentes, **caractérisé en ce que** ledit élément de libération (7) comprend une broche (11) qui est configurée pour être agencée transversalement, en particulier perpendiculairement à l'axe central (A), ladite broche (11) étant en outre configurée pour être retenue dans ledit siège (8) tout en permettant à l'élément de libération (7) de tourner.

4. Porte-filtre (1) selon la revendication précédente, **caractérisé en ce que** ledit élément de libération (7) comprend une came (12) qui est fixée à la broche (11), est configurée pour être pressée contre ladite grille d'aspiration (100) et est adaptée pour tourner autour de ladite broche (11) afin de repousser ladite grille de base (2) à l'écart de ladite grille d'aspiration (100).

5. Porte-filtre (1) selon la revendication précédente, **caractérisé en ce que** ladite came (12) présente une surface extérieure (13) avec une partie centrale (13a) située à une première distance de ladite broche (11) et configurée pour venir en contact avec ladite grille d'aspiration (100) lorsque lesdits moyens d'accouplement (4) sont en prise avec lesdits moyens de retenue (101), au moins une partie périphérique (13b) située à une seconde distance de ladite broche (11), ladite seconde distance étant supérieure à ladite première distance.

6. Porte-filtre (1) selon la revendication précédente, **caractérisé en ce que** ladite partie périphérique (13b) est configurée pour ne pas venir en contact avec ladite grille d'aspiration (100) lorsque lesdits moyens d'accouplement (4) sont en prise avec lesdits moyens de retenue (101), ladite partie périphérique (13b) étant configurée pour venir en contact avec ladite grille d'aspiration (100) lors d'une rotation par rapport à ladite broche (11).

7. Porte-filtre (1) selon l'une quelconque des revendications 4 à 6, **caractérisé en ce que** l'élément de libération (7) comprend une partie de préhension (14) fixée à ladite broche (11) et adaptée pour être saisie par un utilisateur afin de faire tourner ladite came (12) autour de ladite broche (11).

8. Porte-filtre (1) selon la revendication précédente, **caractérisé en ce que** ladite partie de préhension (14) est à l'opposé de ladite came (12) par rapport à ladite broche (11).

9. Agencement de canalisation de gaz comprenant : une grille d'aspiration (100) d'un ventilateur, ladite grille d'aspiration (100) ayant un axe central (A) et des moyens de retenue (101) situés à proximité dudit axe central (A) ; et **caractérisé en ce qu'il** comprend en outre un porte-filtre (1) tel que revendiqué dans l'une quelconque des revendications précédentes, fixé à ladite grille d'aspiration (100).

10. Agencement de canalisation de gaz selon la revendication précédente, **caractérisé en ce que** lesdits moyens de retenue (101) présentent une surface de butée (102), qui est adaptée pour recevoir les moyens d'accouplement (4) du porte-filtre (1).
